Europäisches Patentamt

European Patent Office

Office européen des brevets

Publication number: **0 275 060**

**A1**

# EUROPEAN PATENT APPLICATION

Application number: 88100247.1

Int. Cl.⁴ **F16L 58/10 , B29C 63/36**

Date of filing: 11.01.88

Priority: 14.01.87 GB 8700745
19.02.87 GB 8703841

Date of publication of application:
20.07.88 Bulletin 88/29

Designated Contracting States:
AT BE CH DE FR GB IT LI LU NL SE

Applicant: Insituform International Inc.
80 Broad Street
Monrovia(LR)

Inventor: Smith, Edward Peter
10 Church Gardens
Ravensthorpe Northants(GB)
Inventor: Smith, Paul Samuel
3 Byron Street
Northampton(GB)

Representative: Denmark, James
5 York Place
Leeds LS1 2SD Yorkshire(GB)

Improvements relating to the lining of pipelines and passageways.

This invention provides that a lining tube (14) for lining pipelines and passageways (16) comprises an outer impermeable coating (12) and an inner layer or layers (10) of resin impregnable felt. The felt is impregnated with the resin (10) prior to the application of the lining tube (14) to the pipeline or passageway (16). The tube (14) is applied by inversion of same and the invention resides in that the inner surface of the felt which forms the outer surface of the tube (14) after eversion, is covered by means of an impermeable film to prevent ingress of air into the felt. The impermeable tube (14) preferably is inside the felt in the form of a rope and held in rope form by devices which yield as the impermeable tube (14) opens up during eversion. The invention also provides a method of making the lining tube (14) and a lining tube (14) per se.

FIG. 18.

# IMPROVEMENTS RELATING TO THE LINING OF PIPELINES AND PASSAGEWAYS

This invention relates to the lining of pipelines and passageways and in particular concerns the application of a tube of resin impregnated material to the pipeline or passageway surface by fluid pressure, followed by the curing of the resin so that the impregnated layer becomes a hard, free standing lining, serving to repair and/or rehabilitate the pipeline or passageway.

The lining of pipelines or passageways as above described is now well known and the most widely practised method is outlined in British Patent No. 1449455 wherein there is described a particular method in which the lining tube is everted into the pipeline or passageway. To enable this to be done, the resin impregnated material, typically synthetic felt, is surrounded by an impermeable layer which acts as a means for keeping the everting medium, typically water, out of contact with the raw resin. The impermeable layer also serves another purpose in the application of the resin to the felt in that it enables a vacuum to be applied to the inside of the tube to withdraw all air therefrom and ensure the effective, air free impregnation of the felt, and the impermeable layer performs its functions well. This method is high effective and is successful and the method has been used for the relining of many thousands of kilometers of sewer pipes throughout the world.

The present invention is concerned with enhancing the established method of lining pipelines and passageways to achieve even higher standards and to significantly extend the range of applicationm of the process.

In accordance with the invention a method of lining a pipeline or passageway with a lining tube is provided, wherein the tube comprises a resin absorbent layer, with an impermeable layer to the outside thereof, and wherein the resin absorbent layer is impregnated with curable synthetic resin whilst air is removed from the absorbent layer by applying a vacuum, characterised in that an impermeable tube is applied to the opposite side of the absorbent layer before or during the time when the lining tube is everted into a passageway or pipeline to line same in order to maintain the absence of air in the absorbent layer and in order to prevent air from penetrating the absorbent layer.

The absorbent layer preferably is one or more layers of felt, and the said impermeable layer is preferably a coating bonded to the outside of the or the outermost layer of felt.

The impermeable tube may be a film of synthetic resinous material which is everted into the lining tube after impregnation of same with resin, a vacuum being applied to the interior of the impermeable tube as eversion takes place, in order to exclude air from the interior of the impermeable tube.

The ends of the impermeable tube, after eversion of same through the lining tube may be sealed to the ends of the impermeable coating whereby an impermeable tubular envelope containing the resin impregnated felt there between results. This is subsequently everted into the pipeline or passageway to line same and the resin is cured. It will be understood that the provision of the two impermeable components, the layer and the tube. means that no air can penetrate the felt despite the fact that, as explained herewith, it may be compressed and released locally as it is being everted into and along the pipeline or passageway.

Another method of achieving the same result is that the impermeable tube is first of all introduced into the pipeline or passageway, and the lining tube is everted into the pipeline or passageway, by being everted into the impermeable tube, and at the same time a vacuum is pulled on the inside of the impermeable tube preventing air from contacting the everting face of the felt. In this method, the impermeable tube is applied to the felt as eversion is taking place and as in the other method, the impermeable tube lies on the passageway or pipeline surface when eversion has been completed.

In yet a third method for achieving the same end, the impermeable tube is pulled into the lining tube or the lining tube is built around the lining tube, the lining tube being folded into rope form and being held in such form by fracturable holding devices, such as elastic bands or breakable ties. The lining is impregnated as in the first method except that the impregnation with removal of the air must take place more slowly to allow the resin to track over the folded impermeable tube. In the subsequent eversion process, the impermeable tube is unfolded and applied to the surface of the felt which faces the passageway or pipeline surface, the fracturable holding devices breaking as eversion proceeds.

Preferably, during the installation, a bubble of air or the like is trapped inside the impermeable tube and between holding devices such as nip rollers, so as to squeeze out any air in the resin impregnated material before the lining tube comprising impregnated material, outer coating and impermeable tube are everted.

By this means, when the lining tube reaches the eversion face, the possibility of air leaching back into the impregnated material is avoided.

The felt material may be of polyester or acrylic fibre or any other suitable resin absorbent material.

and an appropriate coating such as polyurethane. p.v.c. or laminate coating may form the outer impermeable layer. The impermeable tube may be formed by any suitable material such as polyurethane, nylon or p.v.c. and may be a reinforced material such as a rubber coated fabric. Additionally, the felt material may be provided with reinforcing fibres such as aramide or glass fibres. The resin system which is used may be any suitable. Thus, the resin may be a heat curable resin or it may be a light curable resin, and in the appropriate case, heat will be used to cure the resin or light of appropriate wavelengths as set forth in our co-pending European patent applciation number 84116350.1 may be used for effecting the cure of the resin.

Embodiments of the present invention will now be described, by way of example, with reference to the accompanying drawings, wherein:-

Fig. 1 is a sectional elevation of a lining tube of type used in the embodiments of the invention;

Fig. 2 is a view similar to Fig. 1 with the lining tube of Fig. 1 under vacuum;

Fig. 3 is a diagrammatic sectional of the elevation showing the lining tube of Figs. 1 and 2 being applied to a passageway by an eversion process;

Fig. 4 is an end view of the everting face of the lining tube shown in Fig. 3;

Figs. 5.6, and 7 are enlarged views illustrating how the material of the lining tube compresses and relaxes;

Fig. 8 shows the insertion of an impermeable tube into a lining tube according to Figs. 1 and 2, and according to a second embodiment of the invention;

Fig. 9 is a sectional of the elevation of the tube of Fig. 8 after the eversion process has been completed;

Fig. 10 is a sectional elevation showing the insertion of the lining tube of Fig. 9;

Fig. 11 is a diagram illustrating yet another embodiment of the invention;

Fig. 12 shows how the impermeable tube can be bunched into rope form for insertion in a lining according to Figs. 1 and 2;

Fig. 13 shows an alternative folding arrangement for the tube of Fig. 12;

Fig. 14 shows in perspective view a length of the tube of Fig. 12 with the holding devices thereon;

Fig. 15 is a sectional elevation similar to Fig. 2 but showing the impermeable tube located in the inside of the lining tube;

Fig. 16 illustrates diagrammatically the lining tube of Fig 15 during its eversion;

Fig. 17 is a view similar to Fig 16, but shows a modified method of lining; and

Fig. 18 illustrates a method of making the lining tube of Fig 15.

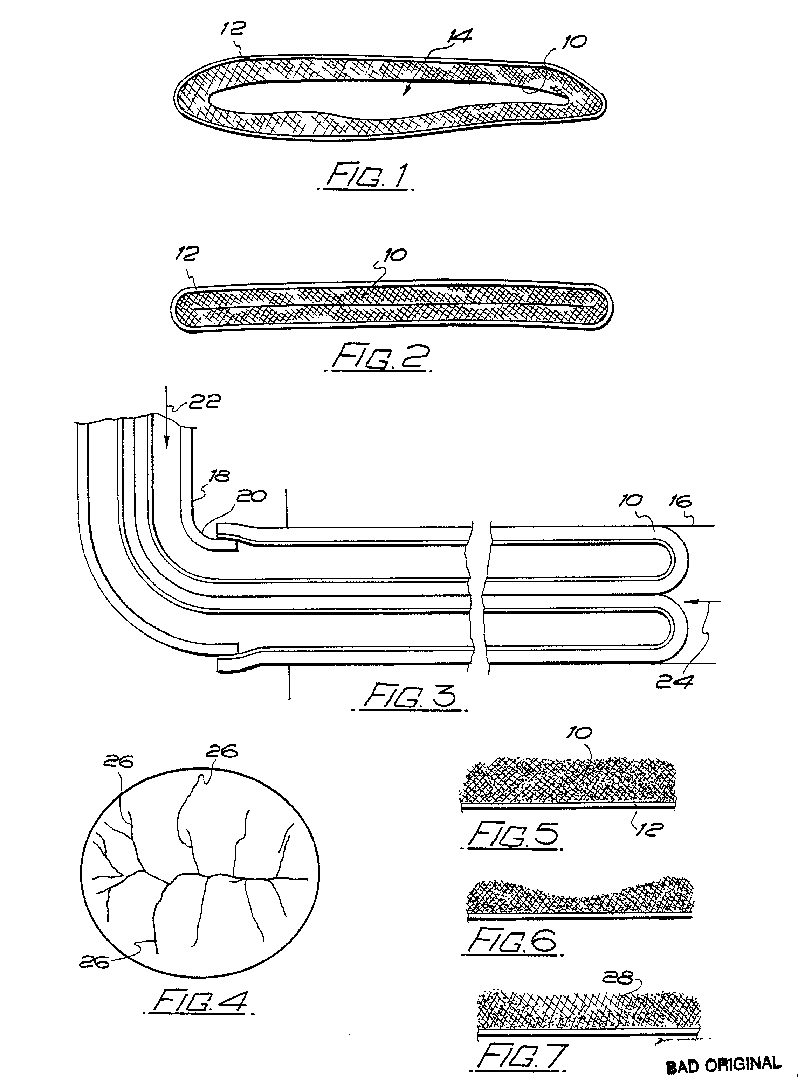

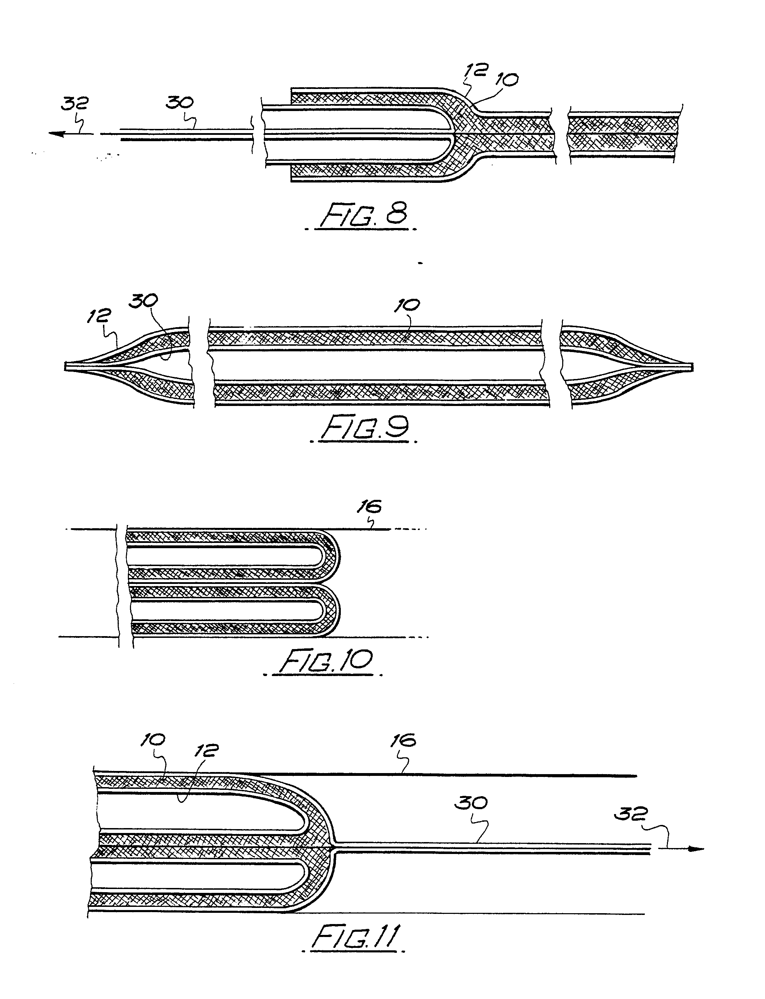

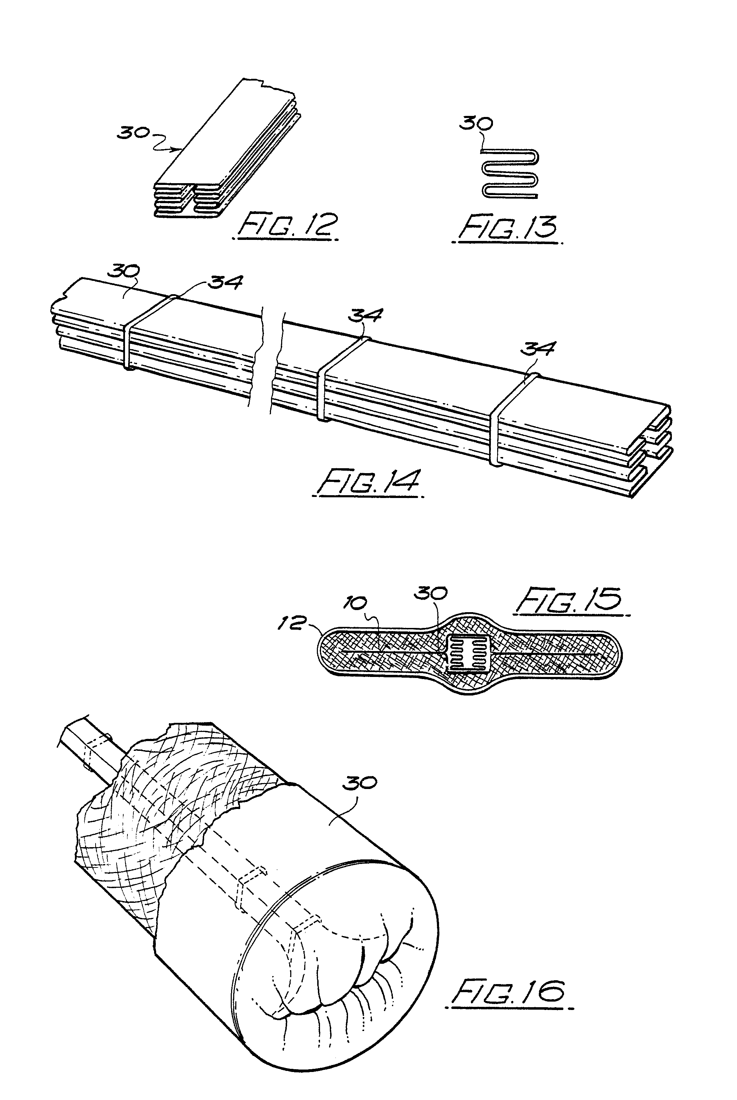

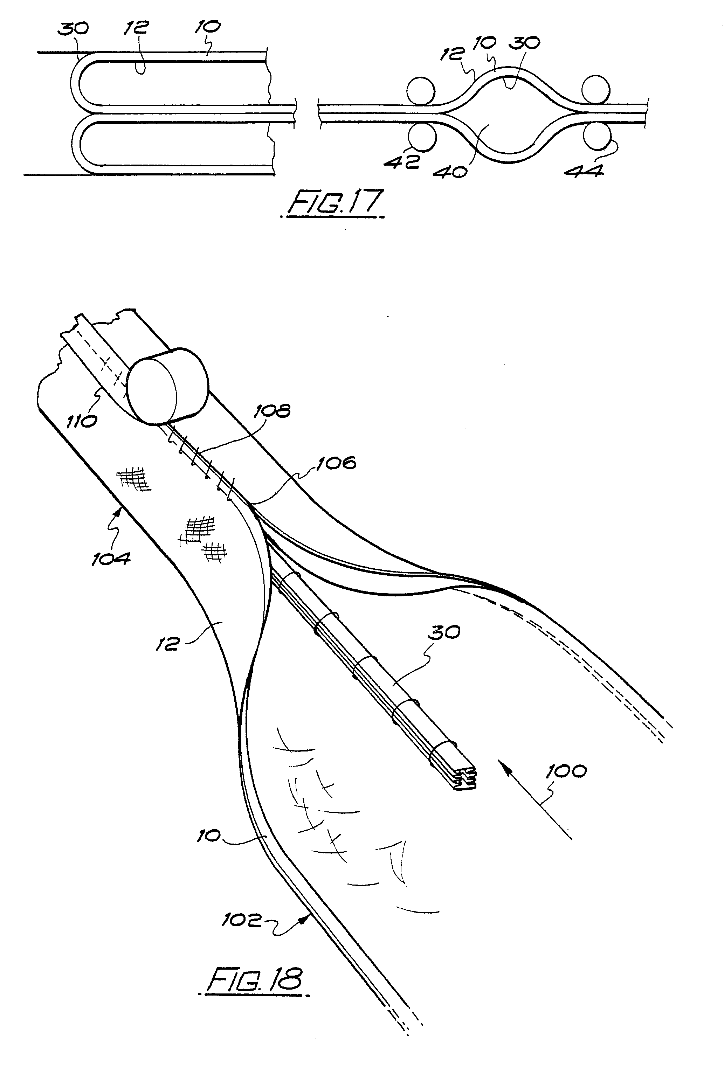

Referring to the drawings, and firstly to Fig. 1, typical lining tube of the type used in this invention comprises a layer 10 of resin absorbent material which typically is a felt such as a polyester or acrylic felt of thickness in the range of 6 mm to 30 mm, but the felt may be as thick 45 mm or more. The felt layer maybe made up of a number of individual layers, but only one layer is shown in Fig. 1 for the interest of simplicity of description. The outside surface of the felt 10 is covered by an impermeable layer 12 which is a bonded coating thereby sealing the tube. Synthetic resin is injected into the interior of the tube 14 and then is worked for example by means of rollers in order thoroughly to impregnate the felt 10, and at the same time a vacuum is applied to the inside of the tube in order to draw the air from the interstises of the fibre so that complete and thorough impregnation of the felt takes place. In Fig. 2 the tube is shown as being collapsed in that all of the air has been drawn out of the tube, but in fact the layer 10 is thoroughly impregnated with the curable synthetic resin. In order to apply the tube of Fig. 2 to a pipeline or passageway, it is everted into and along the pipeline or passagway as shown in Fig. 3. The passageway is indicated by numeral 16, and an elbow pipe 18 is also shown as such a pipe is commonly used in the eversion process. An end of the lining tube 10/12 is fixed to the end 20 of the pipe 18 after being turned back on the remainder of the lining tube, and then water or air or a combination of these fluids is introduced as indicated by arrow 22 into the pipe 18 in order to force the lining 10/20 to turn inside out as shown in Fig. 3, and for the felt layer 10 to be applied against the surface of passageway 16.

Fig. 4 is a view looking in direction of arrow 24 in Fig. 3 towards the everting face of the lining, and it will be seen that in fact the lining in the felt layer does have a plurality of creases and folds 26 in the everting face. At these folds in fact the felt material can sometimes be squeezed and crushed which can have the effect as follows and as explained in relation to Figs 5,6 and 7.

Fig. 5 shows a section of the felt layer 10 and the associated coating 12 in the normal uncrushed or uncompressed state. However, should the resin impregnated felt be crushed as shown in Fig. 6, it compresses, and the resin is displaced away from the crushed area. If the crushing force releases, the felt recovers by its natural resiliency, but the resin may not move back into the expanded region if air is in the vicinity of the expanded region, because the air will flow into the expanded felt giving rise to air pockets within the felt. In Fig. 5,6 and 7, the resin material is indicated by the dotted shading, and it can be seen in Fig 7 that after the material has been crushed and then released, the area 28 may be filled with air. If the resin cures in this condition, the region 28 will have air pockets or pores which may be undesirable where the cured lining is to carry gas under pressure as air and/or gas may flow through the lining at these points. which is undesirable. This is particularly important in the case where the lined pipe is to carry fluent medium such as gas or water under pressure.

The present invention aims enhances the known process by providing to the side of the felt opposite the coated side, an impermeable tube, before the vacuum effect illustrated in Fig. 2 is in fact lost whereby it becomes well nigh impossible for any air to enter into the felt layer despite the fact that it may be locally crushed during the eversion process.

In the arrangement shown in Fig. 8, the lining 10,12 after it has been impregnated to the condition shown in Fig. 2, has a lining tube of impermeable flexible material 30 everted thereinto as shown in Fig. 8 so as to form a lining tube on the inner surface of the felt 10. When eversion has been completed, the ends of the lining tube 30 may be bonded to the impermeable outer coating 12 as shown in Fig. 9, whereby the felt 10 becomes trapped in an envelope between the outer layer 12 and the inner tube 30. The lining in this condition can be everted into the passageway 16 as shown in Fig. 10 using water or gas under pressure as required.

When the tube 30 is being everted into the lining 10/12 as shown in Fig. 8, the interior of the tube 30 is preferably vacated by having a vacuum applied thereto as indicated by numeral 32 so in other words all residual air is withdrawn from the interior of the tube 30 so that it cannot be brought into contact with the face of the resin layer 10.

In the arrangement of Fig. 11, the impermeable tube 30 is first of all placed inside the passageway 16, and then the lining tube 10/12 is everted into the inside of the tube 30. The inside of the tube 30 is again vacated by applying a vacuum to the inside thereof as indicated by reference numeral 32 in order to exclude all air from contact with the everting surface of the lining tube.

Eversion may be effected by water or by gas under pressure, or by a combination of these measures, regardless of whether or not the eversion is into the lining tube as illustrated in Fig. 8, or by eversion of the lining tube itself as indicated in Figs. 10 and 11.

Another embodiment of the invention is illustrated in Figs. 12 to 16, and in this embodiment the everting tube 30 is folded into rope form as indicated in Fig. 12 or Fig. 13, and then as shown in Fig. 14, breakable tie devices 34 are applied round the folded tube 30 so as to hold it in rope form.

The folded tube 30 is arranged to be placed inside the lining tube 10.12 as shown in Fig. 15, when the tube is in the condition shown in Fig. 2 so that the inside of the tube 10/12 will be filled with resin which impregnates the layer 10 and all the air will be excluded. The assembly of Fig. 15 can be achieved either by pulling the rope form tube 30 into the interior of the lining as shown in Fig. 1, followed by impregnation, or alternatively the lining can be built up around the rope form tube 30. In any case, the resin is inserted into the interior of the tube after it is assembled, care being taken to ensure that all air is withdrawn, and that the resin effectively tracks around the rope form tube 30.

In the installation of the assembly shown Fig. 15, the end of the rope form tube 30 is opened out along with the end of the lining tube 10/12 and the combined layers are turned back so that the assembly can be everted as indicated in Fig. 16 into the pipeline or passageway in a manner shown in Fig. 10. During such eversion process, the tube 30 will come to lie to the outside of the everted liner as shown in Fig. 16, and during the eversion process, it will be understood that the folded tube 30 opens up to full size so as to lie between the pipeline surface and the resin impregnated felt layer, and during this opening up of the inner tube 30, the tie devices 34 which may simply be conventional elastic bands, break in turn to allow the eversion and lining process to continue.

In the installation of the assembly shown Fig. 17 the end of the rope form tube 30 is opened out along with the end of the lining tube 10/12 and an air bubble is introduced into the tube 30. The combined layers are turned back so that the assembly is everted as indicated in Fig. 17 into the pipeline or passageway in the manner shown. It can be seen from Fig. 17 that the air bubble 40 is trapped between two holding devices, namely two roller pairs 42. 44 which nip the tube as it passes therebetween to exclude any air from becoming entrapped in the impregnated felt, and so that there will be no formation of air pockets as described in relation to Figs. 5 to 7 in the felt after eversion. During the eversion process, the tube 30 will come to lie to the outside of the everted liner as shown in Fig. 17 and during the eversion process, it will be understood that the folded tube 30 opens up to full size as it passes the bubble and will lie between the pipeline surface and the resin impregnated felt layer, and during the opening up of the inner tube 30 as it passes the bubble 40, the tie devices 34 which may simply be conventional elastic bands. break in turn to allow the eversion. and lining process to continue.

In the embodiment of Fig. 17 when the lining tube has been applied to the pipeline or passageway surface, and application must take place before the resin material cures. the resin is subsequently cured by any suitable means. such as by heat or by light depending upon the nature of the resin system used.

Instead of the air bubble being created in the impermeable tube during eversion. it may be created in this tube when the absorbent felt is being impregnated.

In each case, when the lining tube has been applied to the pipeline or passageway surface, and application must take place before the resin material cures, the resin is subsequently cured by any suitable means, such as by heat or by light depending upon the nature of the resin system used.

Typically the impermeable tube may be a thin plastic material such as nylon, polyethylene, polypropylene or polyurethane or may be a coated fabric but in all cases the tube should be impermeable to air and water so that contact of the raw resin with air or water during the inversion process is highly unlikely.

In the method shown in Fig. 10, the leading end of the tube 30 is bonded or sealed to the lining tube 10/12 before the vacuum is applied to withdraw all air from inside the tube 30.

The impermeable tube 30 may in some circumstances be formed of a co-extrusion of two or more materials, and in the cases of the Figs. 12 and 13 embodiments, the leading end of the tube 30 is bonded to the outer impermeable layer 12.

The tube 30 is shown in Fig. 15 as being located centrally of the lining tube 10/12, but the tube may alternatively be held by vacuum to one side of the felt if required.

Also in the arrangements of Figs. 12 and 13, because the tube 30 is in folded condition. it may be desirable to introduce a lubricant into the inside of the tube in order to ensure that the tube 30 will unfold smoothly during eversion.

The invention provides that air can be totally excluded from contacting the impregnated felt during eversion. and therefore the creation of air pores within the thickness of the lining tube can be completely avoided, resulting in a tube of homogeneous consistency and minimum porosity.

Fig. 18 shows a method of manufacturing the lining tube shown in Fig. 15. The impermeable tube 30 in rope form is shown as moving in the direction of arrow 100. The outer covering for the tube 30 also travels in the direction 100, and goes from a flat condition as shown at 102 to a tubular form as shown at 104. The outer covering comprises a layer of felt, which is the layer 10, and the outer coating 12. Of the material which is wrapped around the tube 30, the edges meet in the region 106 and are butted and then stitched as shown at 108. The stitching is then covered with a sealing tape 110 which is sealed to the outer coating 12 in order to cover the stitching and to seal the seam so that the outer coating can retain the resin when it impregnates the felt layer 10. The method of sewing and sealing is described in more detail in U.S. Patent 4,446,181 and reference is made thereto for further information.

## Claims

1. A method of lining a pipeline or passageway with a lining tube, wherein the tube comprises a resin absorbent layer, with an impermeable layer to the outside thereof, and wherein the resin absorbent layer is impregnated with curable synthetic resin whilst air is removed from the absorbent layer by applying a vacuum, characterised in that an impermeable tube is applied to the opposite side of the absorbent layer before or during the time when the lining tube is everted into a passageway or pipeline to line same in order to maintain the absence of air in the absorbent layer and in order to prevent air from penetrating the absorbent layer.

1. A method according to Claim 1 wherein the absorbent layer comprises one or more layers of felt, and the said impermeable layer is preferably a coating bonded to the outside of the or the outermost layer of felt.

3. A method according to Claim 1 or 2, wherein ther impermeable tube is a film of synthetic resinous material which is everted into the lining tube after impregnation of same with resin, a vacuum being applied to the interior of the impermeable tube as eversion takes place, in order to exclude air from the interior of the impermeable tube.

4. A method according to claim 4, where the ends of the impermeable tube, after eversion of same through the lining tube, are sealed to the ends of the impermeable coating whereby an impermeable tubular envelope containing the resin impregnated felt therebetween results.

5. A method according to claim 1 or 2, where the impermeable tube is first of all introduced into the pipeline or passageway, and the lining tube is everted into the pipeline or passageway, by being everted into the impermeable tube, and at the same time a vacuum is pulled on the inside of the impermeable tube preventing air from contacting the everting face of the felt.

6. A method according to claim 1, wherein the impermeable tube is pulled into the lining tube or the lining tube is built around the lining tube, the lining tube being folded into rope form and being held in such form by fracturable holding devices, such as elastic bands or breakable ties and in the inversion process the impermeable tube is unfolded and applied to the surface of the felt which faces the passageway or pipeline surface. the fracturable holding devices breaking as eversion proceeds.

7. A method according to any preceding claim. wherein the resin is cured after the lining tube has been applied to the pipeline or passageway surface.

8. A method according to claim 7. wherein the resin is a light curable curable resin and lights are used to cure the resin.

9. A lining tube for use in the method according to claim 6, comprising an outer impermeable coating, an inner resin absorbent layer or layers and an impermeable tube in rope form.

10. A lining tube according to claim 9, wherein the impermeable tube is held in rope form by devices which yield when the lining tube is turned inside out.

11. A lining tube according to claim 9 or 10, wherein the impermeable tube is placed in rope form by having a plurality of inwardly directed pleats or folds which unfold as the lining tube is inverted.

12. A lining tube according to claim 9. 10 or 11 wherein the air between the outer coating and impermeable tube is extracted by vacuum and the vacated space is filled with synthetic resin which impregnates the layer or layers of absorbent material.

13. A method of making a lining tube for use in the method of claim 6 comprising pleating an impermeable flexible tube into rope form and folding around the impermeable tube one or more layers of resin absorbent material and an outer coating, and seaming the layer or layers and to coating to form tubes thereof, the coating being sealed at the seam so as to contain the resin when such resin impregnates the said layer or layers.

14. A method according to claim 13, including the step of holding the impermeable tube.

_FIG.1._

_FIG.2._

_FIG.3._

_FIG.4._

_FIG.5._

_FIG.6._

_FIG.7._

0 275 060

FIG. 8.

FIG. 9.

FIG. 10.

FIG. 11.

0 275 060

FIG.12

FIG.13

FIG.14

FIG.15

FIG.16

_FIG.17_

_FIG.18_

## DOCUMENTS CONSIDERED TO BE RELEVANT

EP 88100247.1

| Category | Citation of document with indication, where appropriate, of relevant passages | Relevant to claim | CLASSIFICATION OF THE APPLICATION (Int. Cl.4) |
|---|---|---|---|
| A | EP - A2/A3 - 0 168 053 (INSITU-FORM GROUP LTD.) <br> * Totality * <br> -- | 1,2,7, 8 | F 16 L 58/10 <br><br> B 29 C 63/36 |
| D,A | GB - A - 1 449 455 (INSITUFORM) <br> * Totality * <br> -- | 1,2,3 | |
| A | GB - A - 1 569 675 (INSITUFORM) <br> * Totality * <br> -- | 1,2 | |
| A | FR - A1 - 2 297 378 (MASUDA SENICHI) <br> * Totality * <br> -- | 1 | |
| A | GAS-WASSER-ABWASSER (Schweizerische Zeitschrift für Gasversorgung und Siedlungswasserwirtschaft), annual set 61, 1981, no. 2, Herausgegeben von der Geschäftsstelle des schweiz. Vereins des Gas- und Wasserfaches in Zürich <br><br> JOSEPH HELMUT PFEFFER, WIEN, UND ROBERT SPRENGER, GOSSAU "Innenauskleidung einer Gasleitung nach dem Insituform-Verfahren in Wien" <br><br> * Pages 46-48 * <br> -- | 1 | **TECHNICAL FIELDS SEARCHED (Int. Cl.4)** <br><br> F 16 L 9/00 <br> F 16 L 55/00 <br> F 16 L 58/00 <br> B 29 C 63/00 |
| A | US - A - 3 494 813 (LAWRENCE) <br> * Totality * <br> ---- | 1 | |

The present search report has been drawn up for all claims

| Place of search | Date of completion of the search | Examiner |
|---|---|---|
| VIENNA | 12-04-1988 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82